# FASCICULE DE BREVET EUROPEEN

(11) **EP 1 035 004 B1**
(45) Date de publication et mention de la délivrance du brevet: **25.06.2003**
(21) Numéro de dépôt: 00400586.4
(22) Date de dépôt: 03.03.2000
(51) Int. Cl.: B62D 25/14

(54) **Agencement d'une colonne de direction dans un habitacle de véhicule automobile et véhicule correspondant**
Anordnung einer Steuersäulenstütze im Fahrgastraum eines Kraftfahrzeuges und dazugehöriges Kraftfahrzeug
Arrangement of a steering column support in the passenger compartment of a motor vehicle and corresponding motor vehicle

(30) Priorité: 05.03.1999 FR 9902790
(43) Date de publication de la demande: 13.09.2000
(73) Titulaire: Ecia Industrie, 92100 Boulogne-Billancourt (FR)
(72) Inventeur: Bugna, Esteban, 70200 Lantenot (FR)
(74) Mandataire: Jacobson, Claude

(56) Documents cités:
- WO-A-96/22903
- DE-A- 19 601 800
- US-A- 4 682 788

## Description

La présente invention concerne un agencement d'une colonne de direction dans un habitacle de véhicule automobile.

On connaît déjà dans l'état de la technique un agencement d'une colonne de direction dans un habitacle de véhicule automobile, du type dans lequel la colonne de direction s'étend à travers un tablier d'une caisse du véhicule, ce tablier séparant l'habitacle d'un compartiment moteur disposé devant cet habitacle. Un agencement selon le préambule de la revendication 1 est connu du document WO 96/22903 A.

Habituellement, la colonne de direction est portée par un support fixé sur le tablier. De ce fait, lors d'un choc frontal relativement violent subi par le véhicule, les organes de ce véhicule logés dans le compartiment moteur ont tendance à se déplacer vers l'arrière du véhicule et à déformer le tablier. Les déformations de ce tablier provoquent un soulèvement de la colonne de direction (solidaire du tablier) et du volant porté par cette colonne. Ce soulèvement accidentel est susceptible de blesser gravement le conducteur du véhicule.

L'invention a pour but d'éviter les déplacements accidentels dangereux d'une colonne de direction de véhicule automobile, lors d'un choc frontal subi par le véhicule.

A cet effet, l'invention a pour objet un agencement d'une colonne de direction dans un habitacle de véhicule automobile, du type précité, caractérisé en ce que le support comprend une platine, reliant la traverse et la potence, sur laquelle est fixée la colonne de direction.

Suivant d'autres caractéristiques de l'invention :
- la première extrémité de fixation de la potence est portée par une première partie de cette potence sensiblement parallèle à la traverse, la seconde extrémité de fixation de la potence est portée par une seconde partie de cette potence sensiblement perpendiculaire à la traverse, et la platine est fixée sur la traverse et la première partie de la potence ;
- la partie du plancher sur laquelle est fixée la seconde extrémité de la potence est délimitée par un tunnel ;
- la potence a une forme générale coudée, les deux parties de cette potence étant reliées entre elles par un coude de cette potence ;
- les deux parties de la potence sont reliées entre elles par une ferrure fixée, de préférence, sur la traverse ;
- la traverse et la potence sont au moins en partie tubulaires, les extrémités de fixation de cette traverse et de cette potence étant formées par des extrémités tubulaires aplaties;
- le véhicule comprenant un pédalier, la colonne de direction et son support sont indépendants du pédalier.

L'invention a en outre pour objet un véhicule automobile comprenant un agencement tel que défini ci-dessus.

L'invention sera mieux comprise à la lecture de la description qui va suivre donnée uniquement à titre d'exemple et faite en se référant aux dessins dans lesquels :
- la figure 1 est une vue schématique de l'habitacle d'un véhicule automobile dans lequel est agencée, selon un premier mode de réalisation de l'invention, une colonne de direction de ce véhicule ;
- les figures 2 et 3 sont des vues similaires à la figure précédente représentant une colonne de direction agencée dans l'habitacle selon des deuxième et troisième modes de réalisation de l'invention.

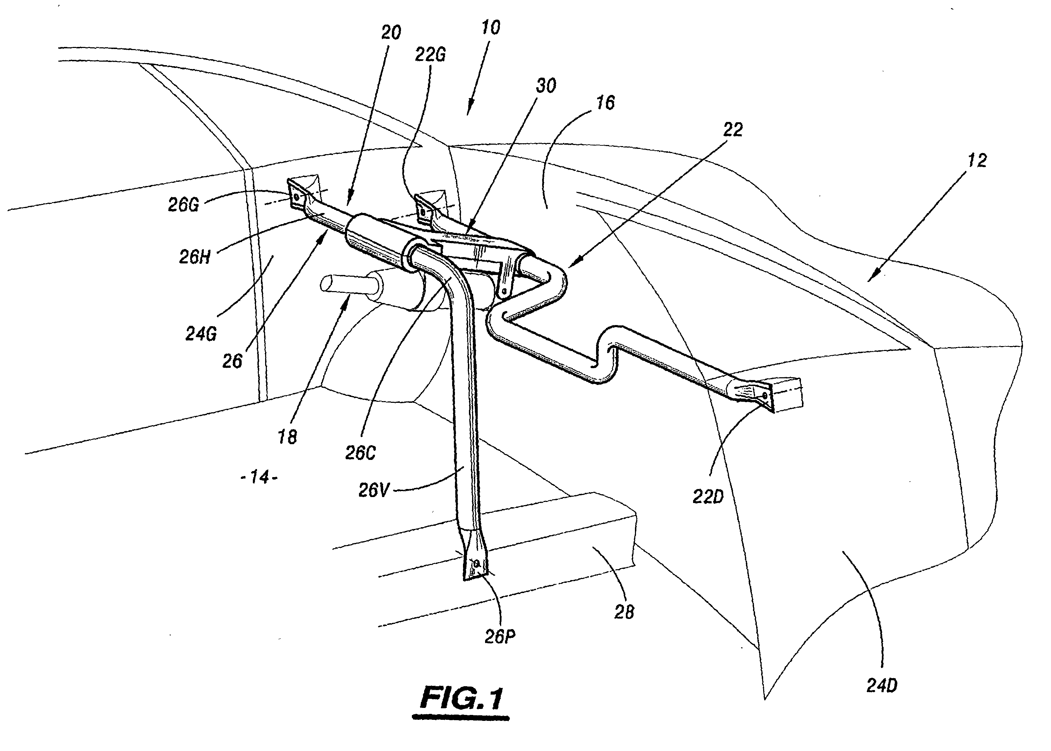

On a représenté schématiquement sur la figure 1 une caisse 10 de véhicule automobile comprenant notamment un compartiment moteur 12 et un habitacle 14.

Dans ce qui suit, les orientations avant, arrière, gauche et droite seront considérées par rapport aux orientations habituelles d'un conducteur du véhicule.

L'habitacle 14, disposé derrière le compartiment moteur 12, est séparé de ce dernier par un tablier 16.

On a également représenté partiellement sur la figure 1 une colonne de direction 18, de type classique, portée par un support 20. Cette colonne de direction 18 s'étend à travers un orifice (non représenté) du tablier 16 depuis le compartiment moteur 12 jusqu'à l'habitacle 14.

Le support 20 est disposé dans l'habitacle 14, en arrière du tablier 16. Le support 20 est fixé sur des parties de la caisse 10 distinctes du tablier 16.

Dans le mode de réalisation illustré sur la figure 1, le support 20 comprend une traversé tubulaire 22, sensiblement horizontale, munie de deux extrémités gauche 22G et droite 22D fixées sur deux flancs latéraux gauche 24G et droit 24D de la caisse respectivement. Ces flancs latéraux 24G, 24D s'étendent en arrière du tablier 16.

Les extrémités 22G, 22D de la traverse sont aplaties et fixées sur les flancs latéraux 24G, 24D de façon connue en soi, par exemple par boulonnage.

Le cas échéant, la traverse 22 est coudée en plusieurs endroits de façon à contourner des organes classiques habituellement agencés dans cette partie de la caisse.

Le support 20 comporte également une potence tubulaire coudée 26 munie de deux parties 26H, 26V reliées entre elles par un coude 26C. Une première partie 26H de la potence est sensiblement horizontale, c'est à dire sensiblement parallèle à la traverse 22. La seconde partie 26V de la potence est sensiblement verticale, c'est à dire sensiblement perpendiculaire à la traverse 22.

La potence 26 est munie d'une première extrémité 26G, portée par la première partie 26H de cette potence, fixée sur le flanc latéral gauche 24G, et d'une seconde extrémité 26P, portée par la seconde partie 26V de cette potence, fixée sur une partie 28 d'un plancher de la caisse 10. Cette partie 28, s'étendant en arrière du tablier 16, est délimitée de préférence par un tunnel dans lequel s'étend par exemple une tringlerie de boîte de vitesse ou une tubulure de gaz d'échappement.

Les extrémités 26G, 26P de la potence 26 sont aplaties et fixées sur le flanc latéral gauche 24G et le tunnel 28 de façon connue en soi, par exemple par boulonnage.

On notera que dans le mode de réalisation représenté sur la figure 1, la traverse 22 est disposée en avant de la potence 26, entre cette dernière et le tablier 16.

Le support 20 comporte encore une platine 30 fixée de façon connue en soi sur la traverse 22 et la partie 26H sensiblement horizontale de la potence 26. La colonne de direction est fixée de façon connue en soi sur cette platine 30, de préférence sur une face inférieure de cette platine 30, de façon à s'étendre sous cette platine 30.

Le support 20 étant fixé sur des parties de la caisse du véhicule distinctes du tablier 16, lors d'un choc frontal relativement violent subi par le véhicule, les déformations du tablier 16 résultant des déplacements des organes logés dans le compartiment moteur 12, n'entraînent pas de déplacements dangereux de la colonne de direction 18, notamment de soulèvement de cette dernière.

Par ailleurs, la platine 30 permet d'augmenter la rigidité du support 20 et donc de limiter notamment les problèmes vibratoires.

En outre, le support 20 et la colonne de direction 18 sont indépendants du pédalier (non-représenté) du véhicule automobile. Ainsi, ce pédalier, qui comprend classiquement des pédales d'accélérateur, de frein et d'embrayage, est porté par des moyens de support distincts du support 20 et de la colonne 18.

Ainsi, lors d'un choc frontal, les organes du véhicule, logés dans le compartiment moteur et reliés au pédalier, ne risquent pas de provoquer un déplacement accidentel de la colonne de direction lorsqu'ils se déplacent eux-mêmes vers l'arrière.

La sécurité du conducteur est donc encore améliorée sans imposer des contraintes de résistance excessives au support 20 de colonne 18.

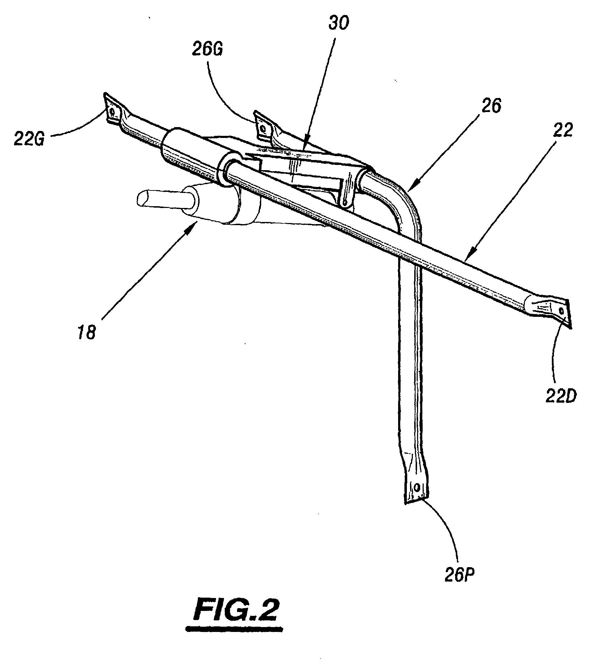

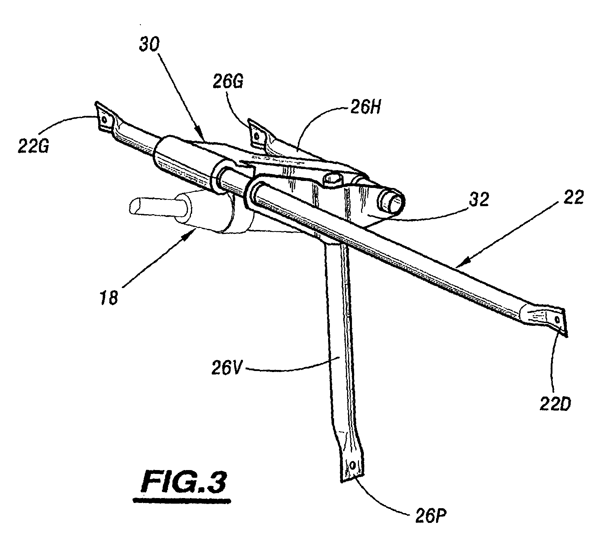

Sur les figures 2 et 3, on a représenté des second et troisième modes de réalisation de l'invention respectivement. Sur ces figures 2 et 3, les éléments analogues à ceux de la figure 1 sont désignés par des références identiques. Pour des raisons de simplification, la caisse 10 n'est pas représentée sur les figures 2 et 3.

Dans le second mode de réalisation de l'invention, illustré sur la figure 2, la potence 26 est disposée en avant de la traverse 22, entre cette traverse et le tablier qui n'est pas représenté.

Dans le troisième mode de réalisation de l'invention illustré sur la figure 3, la potence 26 est placée, comme dans le second mode de réalisation de l'invention, en avant de la traverse 22. Toutefois, dans ce cas, les deux parties 26H, 26V de la potence sont reliées entre elles par une ferrure 32. De préférence, cette ferrure 32 est fixée de façon connue en soi sur la traverse 22.

L'invention ne se limite pas aux modes de réalisation décrits ci-dessus. En particulier, la traverse 22 et la potence 26 ne sont pas nécessairement tubulaires et peuvent être notamment pleines et profilées.

## Revendications

1. Agencement d'une colonne de direction (18) dans un habitacle (14) de véhicule automobile, du type dans lequel la colonne de direction (18) s'étend à travers un tablier (16) d'une caisse du véhicule, ce tablier (16) séparant l'habitacle (14) d'un compartiment moteur (12) disposé devant cet habitacle (14), la colonne de direction (18) étant portée par un support (20) disposé dans l'habitacle (14), en arrière du tablier (16), ce support (20) étant fixé sur des parties (24G, 24D, 28) de la caisse du véhicule distincte du tablier (16), et le support (20) comprenant
une traverse (22) munie de deux extrémités (22G, 22D) fixées sur deux flancs latéraux (24G, 24D) de la caisse respectivement, ces flancs latéraux (24G, 24D) s'étendant en arrière du tablier (16),
une potence (26) munie d'une première extrémité (26G) fixée sur un des flancs latéraux (24G) et d'une seconde extrémité (26P) fixée sur une partie (28) d'un plancher de la caisse du véhicule, cette partie (28) de plancher s'étendant en arrière du tablier (16), **caractérisé en ce que** le support (20) comprend
une platine (30), reliant la traverse (22) et la potence (26), sur laquelle est fixée la colonne de direction (18).

2. Agencement selon la revendication 1, **caractérisé en ce que** la première extrémité de fixation (26G) de la potence est portée par une première partie (26H) de cette potence sensiblement parallèle à la traverse (22), **en ce que** la seconde extrémité de fixation (26P) de la potence est portée par une seconde partie (26V) de cette potence sensiblement perpendiculaire à la traverse (22), et **en ce que** la platine (30) est fixée sur la traverse (22) et la première partie (26H) de la potence.

3. Agencement selon la revendication 1 ou 2, **caractérisé en ce que** la partie (28) du plancher sur laquelle est fixée la seconde extrémité (26P) de la potence est délimitée par un tunnel.

4. Agencement selon l'une quelconque des revendications 1 à 3, **caractérisé en ce que** la potence (26) a une forme générale coudée, les deux parties (26H, 26V) de cette potence étant reliées entre elles par un coude (26C) de cette potence.

5. Agencement selon l'une quelconque des revendications 1 à 3, **caractérisé en ce que** les deux parties (26H, 26V) de la potence sont reliées entre elles par une ferrure (32) fixée, de préférence, sur la traverse (22).

6. Agencement selon l'une quelconque des revendications 1 à 5, **caractérisé en ce que** la traverse (22) et la potence (26) sont au moins en partie tubulaires, les extrémités de fixation (22G, 22D, 26G, 26P) de cette traverse et de cette potence étant formées par des extrémités tubulaires aplaties.

7. Agencement selon l'une quelconque des revendications 1 à 6, **caractérisé en ce que**, le véhicule comprenant un pédalier, la colonne de direction (18) et son support (20) sont indépendants du pédalier.

8. Véhicule automobile comprenant un agencement de colonne de direction selon l'une quelconque des revendications précédentes.

## Patentansprüche

1. Anordnung einer Lenksäule (18) in einem Insassenraum (14) eines Kraftfahrzeugs, wobei die Lenksäule (18) eine Wand (16) einer Karosserie des Fahrzeugs durchquert, die den Insassenraum (14) von einem vor dem Insassenraum (14) angeordneten Motorabteil (12) trennt, wobei die Lenksäule (18) von einem in dem Insassenraum (14) hinter der Wand (16) angeordneten Halter (20) getragen ist, der an von der Wand (16) verschiedenen Teilen (24G, 24D, 28) der Fahrzeugkarosserie befestigt ist und einen Querarm (22), der mit zwei Enden (22G, 22D) versehen ist, die an zwei sich hinter der Wand (16) erstreckenden Seitenwangen (24G, 24D) der Karosserie befestigt sind, und einen Träger (26) umfaßt, der mit einem ersten Ende (26G), das an einer der Seitenwangen (24G) befestigt ist und mit einem zweiten Ende (26P) versehen ist, das an einem sich hinter der Wand (16) erstreckenden Teil (28) eines Bodens der Fahrzeugkarosserie befestigt ist, **dadurch gekennzeichnet, daß** der Halter (20) eine Platine (30) umfaßt, die den Querarm (22) und den Träger (26) verbindet und an der die Lenksäule (18) befestigt ist.

2. Anordnung nach Anspruch 1, **dadurch gekennzeichnet, daß** das erste Befestigungsende (26G) des Trägers von einem zum Querarm (22) im wesentlichen parallelen ersten Teil (26H) dieses Trägers getragen ist, daß das zweite Befestigungsende (26P) des Trägers von einem zum Querarm (22) im wesentlichen senkrechten zweiten Teil (26V) dieses Trägers getragen ist und daß die Platine (30) an dem Querarm (22) und an dem ersten Teil (26H) des Trägers befestigt ist.

3. Anordnung nach Anspruch 1 oder 2, **dadurch gekennzeichnet, daß** der Teil (28) des Bodens, an dem das zweite Ende (26P) des Trägers befestigt ist, von einem Tunnel gebildet wird.

4. Anordnung nach einem der Ansprüche 1 bis 3, **dadurch gekennzeichnet, daß** der Träger (26) eine gekrümmte Gesamtform hat, wobei die beiden Teile (26H, 26V) dieses Trägers miteinander durch eine Krümmung (26C) des Trägers verbunden sind.

5. Anordnung nach einem der Ansprüche 1 bis 3, **dadurch gekennzeichnet, daß** die beiden Teile (26H, 26V) des Trägers miteinander durch ein vorzugsweise an dem Querarm (22) befestigtes Beschlagteil (32) verbunden sind.

6. Anordnung nach einem der Ansprüche 1 bis 5, **dadurch gekennzeichnet, daß** der Querarm (22) und der Träger (26) mindestens teilweise rohrförmig sind, wobei die Befestigungsenden (22G, 22D, 26G, 26P) des Querarms und des Trägers von abgeflachten rohrförmigen Enden gebildet sind.

7. Anordnung nach einem der Ansprüche 1 bis 6, **dadurch gekennzeichnet, daß**, wenn das Fahrzeug ein Pedalsystem aufweist, die Lenksäule (18) und ihr Halter (20) von dem Pedalsystem unabhängig sind.

8. Kraftfahrzeug mit einer Lenksäulenanordnung nach einem der vorhergehenden Ansprüche.

## Claims

1. Arrangement of a steering column (18) in the passenger compartment (14) of a motor vehicle, of the type in which the steering column (18) extends through an apron (16) of the body of the vehicle, the apron (16) separating the passenger compartment (14) from an engine compartment (12) disposed in front of the passenger compartment (14), the steering column (18) being borne by a support (20) disposed in the passenger compartment (14), behind the apron (16), the support (20) being fastened to portions (24G, 24D, 28) of the body of the vehicle different from the apron (16), and the support (20) comprising
a crossbeam (22) provided with two ends (22G, 22D) fastened to two lateral flanks (24G, 24D) respectively of the body, the lateral flanks (24G, 24D) extending behind the apron (16),
a bracket (26) provided with a first end (26G) fastened to one of the lateral flanks (24G) and with a second end (26P) fastened to a portion (28) of the floor of the body of the vehicle, the floor portion (28) extending behind the apron (16), **characterised in that** the support (20) comprises
a plate (30), connecting the crossbeam (22) and the bracket (26), and to which the steering column (18) is fastened.

2. Arrangement according to claim 1, **characterised in that** the first fastening end (26G) of the bracket is borne by a first portion (26H) of the bracket substantially parallel to the crossbeam (22), **in that** the second fastening end (26P) of the bracket is borne by a second portion (26V) of the bracket substantially perpendicular to the crossbeam (22), and **in that** the plate (30) is fastened to the crossbeam (22) and the first portion (26H) of the bracket.

3. Arrangement according to claim 1 or 2, **characterised in that** the portion (28) of the floor to which the second end (26P) of the bracket is fastened is bounded by a tunnel.

4. Arrangement according to any one of claims 1 to 3, **characterised in that** the bracket (26) is of generally elbowed shape, the two portions (26H, 26V) of the bracket being connected to each other by an elbow (26C) of the bracket.

5. Arrangement according to any one of claims 1 to 3, **characterised in that** the two portions (26H, 26V) of the bracket are connected to each other by a brace (32) fastened, preferably, to the crossbeam (22).

6. Arrangement according to any one of claims 1 to 5, **characterised in that** the crossbeam (22) and the bracket (26) are at least partially tubular, the fastening ends (22G, 22D, 26G, 26P) of the crossbeam and of the bracket being formed by flattened tubular ends.

7. Arrangement according to any one of claims 1 to 6, **characterised in that**, the vehicle comprising a pedal board, the steering column (18) and its support (20) are independent of the pedal board.

8. A motor vehicle comprising a steering column arrangement according to any one of the preceding claims.
